# EUROPEAN PATENT APPLICATION

(11) **EP 3 978 676 A1**
(43) Date of publication of application: **06.04.2022**
(21) Application number: 20814734.8
(22) Date of filing: 15.05.2020
(51) Int. Cl.: D06F 37/06, D06F 39/08

(54) **LAUNDRY LIFTING DEVICE FOR WASHING MACHINE, AND DRUM WASHING MACHINE**

(30) Priority: 28.05.2019 CN 201910452370
(71) Applicant: Qingdao Haier Drum Washing Machine Co., Ltd., Shandong 266101 (CN); Haier Smart Home Co., Ltd., Qingdao, Shandong 266101 (CN)
(72) Inventor: ZHAO, Zhiqiang, Qingdao, Shandong 266101 (CN); XU, Sheng, Qingdao, Shandong 266101 (CN); LV, Peishi, Qingdao, Shandong 266101 (CN); LAO, Chunfeng, Qingdao, Shandong 266101 (CN); LI, Yimin, Qingdao, Shandong 266101 (CN)
(74) Representative: Beck & Rössig European Patent Attorneys
(86) International application number: PCT/CN2020/090555
(87) International publication number: WO 2020/238654

(57) **Abstract**

Provided are a laundry lifting device for a washing machine, and a drum washing machine. The laundry lifting device for a washing machine comprises: a body, which has an accommodating chamber therein; a water inlet (3209) provided in the body and communicating with the accommodating chamber; and a centrifugal drainage assembly arranged inside the accommodating chamber. An initial state of the centrifugal drainage assembly is a closed state, and the centrifugal drainage assembly is able to, under action of a centrifugal force, be opened for drainage. By means of providing a centrifugal drainage assembly in a lifting device, not only are laundry lifting and drainage of a drum washing machine with a hole-free inner drum achieved, modular supply is also formed, thereby facilitating production and assembly and improving the assembly efficiency.

## Description

### TECHNICAL FIELD

The present disclosure relates to the technical field of laundry device, and particularly herein relates to a laundry lifting device for a washing machine and a drum washing machine.

### BACKGROUND

As the most widely used household appliance in people's daily life, washing machine helps people get rid of the trouble of doing laundry and brings great convenience to people. However, washing machine also has certain shortcomings, such as long time-consuming and large water consumption, etc. With the development of society, water resource is becoming more and more important as an important natural resource, and people's awareness of water saving also increases. Therefore, it is particularly important that how to realize water-saving function of the washing machine.

In order to solve water-saving problem of washing machines, some patents have already been proposed. For example, a Chinese patent with patent number 201410215346.3 is named a drum washing machine. The invention relates to a drum washing machine comprising a cabinet, an inner drum and an outer drum are provided in the cabinet, a door seal is provided between the outer drum and the cabinet, and the inner drum is connected with a driving device. The inner drum is a hole-free inner drum, and the inner drum is a cone-shaped drum with a small diameter at the bottom and a large diameter at the mouth. The mouth of the inner drum is curved inwards. The door seal is provided with a water inlet pipe, one end of the water inlet pipe is connected with a washing water rapid heating device, another end of the water inlet pipe passes through the door seal and extends into the inner drum, and the outer drum is provided with a drainage outlet and a water pressure detection device. It can be seen from the above technical scheme that the inner drum of the invention is a hole-free inner drum. The water inlet pipe is arranged on the door seal for water entering the inner drum, and drainage during the dehydration process is realized by the shape of the inner drum itself, which can avoid water being stored between the inner drum and the outer drum so as to substantially save washing water consumption.

The above invention patent provides a drum washing machine with a hole-free inner drum. The drum washing machine disclosed in the patent realizing water input through a door seal. The main function of the door seal is to seal the mouth of the outer drum of the washing machine, thus the installation of the water inlet pipe will easily affect the sealing effect of the door seal, making it not easy to realize. In addition, the drainage of the patent is mainly realized by the structure of inner drum combined with high-speed drive of the driving device. The structure of inner drum is complicated, and the drainage effect and the sealing effect of the inner drum cannot be guaranteed, resulting in many problems in practical applications.

In view of this, the disclosure is proposed.

### SUMMARY

In order to solve the technical problem above, the first object of the disclosure is to provide a laundry lifting device for a washing machine, specifically, the following the technical scheme is adopted:
A laundry lifting device for a washing machine, wherein comprises:
   a body, which has an accommodating chamber therein;
   a water inlet provided in the body and communicating with the accommodating chamber;
   and a centrifugal drainage assembly arranged inside the accommodating chamber;
   an initial state of the centrifugal drainage assembly is a closed state, and the centrifugal drainage assembly is able to, under action of a centrifugal force, be opened for drainage.
Further, the body comprises:
   a lifting shell, which has a protrusion on a surface of the lifting shell and has an open cavity therein;
   a lifting base which is detachably installed at an open end of the open cavity of the lifting shell and forms the accommodating chamber;
   the centrifugal drainage assembly is installed at the lifting base, and the water inlet is arranged at the lifting shell and/or at the lifting base.
Further, the centrifugal drainage assembly comprises:
   a centrifugal part, used for producing centrifugal movement under action of the centrifugal force;
   a sealing plunger, used for block a drainage outlet;
   the centrifugal movement of the centrifugal part drives the sealing plunger to move to open the drainage outlet;
   the lifting base is provided with a plunger through hole for the sealing plunger to pass through the accommodating chamber.

Further, the centrifugal part comprises a connecting portion and a counterweight portion, one end of the connecting portion is connected with the counterweight portion, another end of the connecting portion is rotatably connected with the sealing plunger, and a middle part of the connecting portion is rotatably installed on the lifting base to form a lever structure;
a guiding part is installed on the lifting base at the plunger through hole, the guiding part has a guiding channel inside that is opposite to the plunger through hole, and the sealing plunger is arranged inside the guiding channel to move back and forth along the guiding channel.

Further, the lifting base has a base fixing column, a connecting rib is arranged in the open cavity of the lifting shell and extends towards the open end, and the base fixing column is fixedly connected with the connecting rib;
preferably, the centrifugal drainage assembly is arranged at center part of the lifting base, and there is at least two base fixing column which are symmetrically arranged on both sides of the centrifugal drainage assembly.

Further, the base fixing column and the connecting rib are clamped and positioned by a clamping structure, and the base fixing column and the connecting rib are fixedly connected by a connecting part after positioning;
preferably, a locking protrusion is provided on the connecting rib, the base fixing column is provided with a channel for the connecting rib to extend in, and a locking groove which is coordinately clamped with the locking protrusion is provided on a peripheral wall of the channel;
the connecting rib is provided with a connecting hole, the base fixing column is provided with a positioning hole opposite to the connecting hole, and the connecting part passes through the positioning hole and is fixedly connected to the connecting hole.

Further, both ends of an open of the lifting shell are respectively provided with a shell fixing column used for fixedly installing the lifting device, and the lifting base is set in avoidance at position corresponding to the shell fixing column.

Preferably, the lifting base is a plate-shaped structure that covers the open cavity of the lifting shell, an interval is respectively provided between both ends of the plate-shaped structure and edge of the open of the lifting shell, and the shell fixing column is correspondingly arranged in the interval at both ends.

Further, the lifting shell comprises an annular base and a protrusion which is integrally formed with the annular base and protrudes toward one side;
the water inlet is provided on the annular base, and the protrusion is provided with a plurality of spray holes communicating with the open cavity.

The second object of the disclosure is to provide a washing machine including the above laundry lifting device, specifically:
A drum washing machine including the laundry lifting device for a washing machine, wherein comprises:
inner drum;
inner drum door, installed on the mouth of the inner drum and able to be opened/closed;
an independent washing chamber is formed by the inner drum door when closed together with the inner drum so as to independently contain washing water when washing clothes;
a drainage outlet is provided on side wall of the inner drum, the lifting device is installed at the drainage outlet on inner wall of the inner drum, and the centrifugal drainage assembly blocks and closes the drainage outlet.

Further, the side wall of the inner drum is provided with a fixing hole used for fixedly installing the lifting device, and the lifting device is hermetically fixed on the fixing hole through a connecting part.

The laundry lifting device of the disclosure can be installed on inner wall of the inner drum of a drum washing machine and lifts laundry to a certain height and then drops the laundry with rotation of the inner drum during washing process. In the disclosure, a centrifugal drainage assembly is integrated in the laundry lifting device. The initial state of the centrifugal drainage assembly is a closed state to keep the inner drum closed and independently containing washing water. The centrifugal drainage assembly can be opened for drainage under the action of centrifugal force, realizing the drainage of a drum washing machine having a hole-free inner drum.

In the drum washing machine of the disclosure, an inner drum door is installed on the mouth of the inner drum, and the inner drum adopts a drum design without holes, together forming an independent washing chamber for independently containing washing water when washing clothes. There is no need to fill washing/rinsing water between the inner drum and the outer drum so as to greatly reduce the washing water consumption of the washing machine. It avoids the possibility of dirt adhesion between the inner drum and the outer drum, greatly improves user health and user experience, and greatly saves water resource.

### BRIEF DESCRIPTION OF THE DRAWINGS

FIG. 1 is a schematic diagram of a drum washing machine in embodiment 1 of the disclosure;
FIG. 2 is a stereoscopic structural diagram 1 of a laundry lifting device for a washing machine in embodiment 1 of the disclosure;
FIG. 3 is a stereoscopic structural diagram 2 of a laundry lifting device for a washing machine in embodiment 1 of the disclosure;
FIG. 4 is a front view of a laundry lifting device for a washing machine in embodiment 1 of the disclosure;
FIG. 5 is a cross-sectional view of a laundry lifting device for a washing machine in embodiment 1 of the disclosure taken along plane A-A in FIG. 4;
FIG. 6 is cross-sectional view of a laundry lifting device for a washing machine in embodiment 1 of the disclosure taken along plane B-B in FIG. 4 (the first implementation);
FIG. 7 is cross-sectional view of a laundry lifting device for a washing machine in embodiment 1 of the disclosure taken along plane B-B in FIG. 4 (the second implementation);
FIG. 8 is a schematic diagram of a drum washing machine in embodiment 2 of the disclosure;
FIG. 9 is a schematic diagram of a drum washing machine in embodiment 3 of the disclosure (the first implementation);
FIG. 10 is a schematic diagram of a drum washing machine in embodiment 3 of the disclosure (the second implementation);
FIG. 11 is a schematic diagram of a drum washing machine in embodiment 3 of the disclosure (the third implementation);
FIG. 12 is a schematic diagram of a drum washing machine in embodiment 4 of the disclosure;
Fig. 13 is a partial enlarged view of the drum washing machine in embodiment 4 of the disclosure in Fig. 12 (pressure relief state);
Fig. 14 is a partial enlarged view of the drum washing machine in embodiment 4 of the disclosure in Fig. 12 (pressure boosting state);
FIG. 15 is a schematic diagram of a drum washing machine in embodiment 5 of the disclosure;
Fig. 16 is a partial enlarged view of the drum washing machine in embodiment 5 of the disclosure in Fig. 15 (pressure relief state of the first implementation);
Fig. 17 is a partial enlarged view of the drum washing machine in embodiment 5 of the disclosure in Fig. 15 (pressure boosting state of the first implementation);
Fig. 18 is a partial enlarged view of the drum washing machine in embodiment 5 of the disclosure in Fig. 15 (pressure relief state of the second implementation);
Fig. 19 is a partial enlarged view of the drum washing machine in embodiment 5 of the disclosure in Fig. 15 (pressure boosting state of the second implementation).

### DETAILED DESCRIPTION

A laundry lifting device for a washing machine and a drum washing machine of the disclosure will be described in further detail with reference to the attached figures.

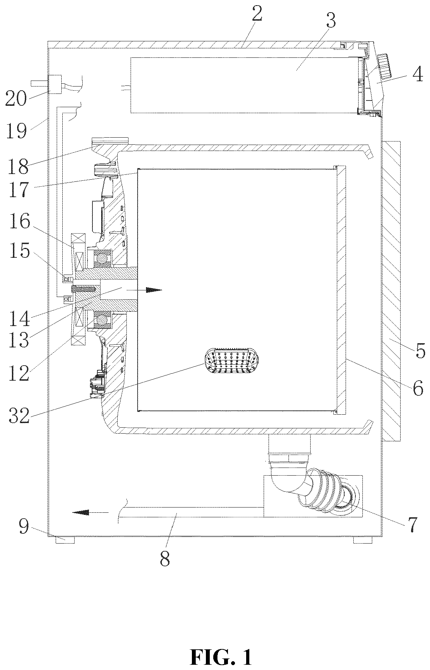

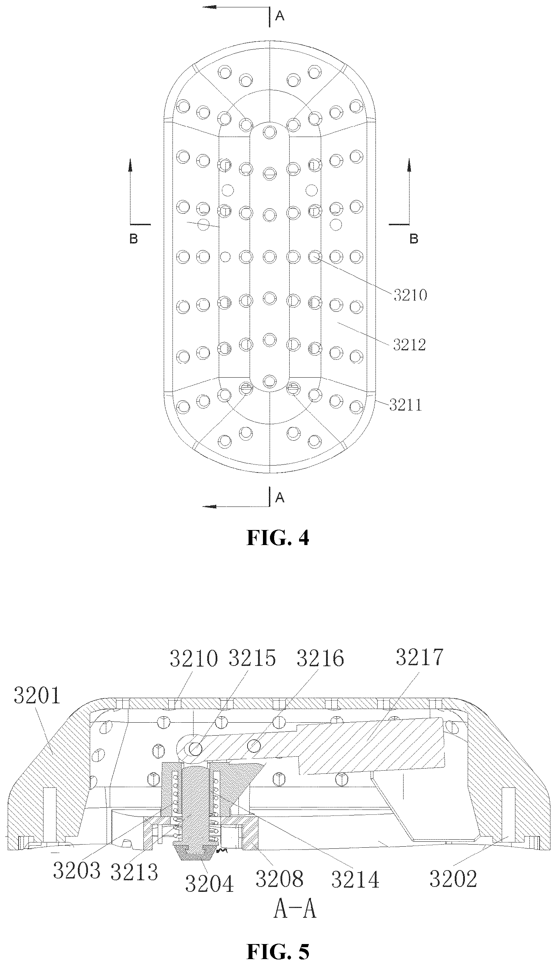

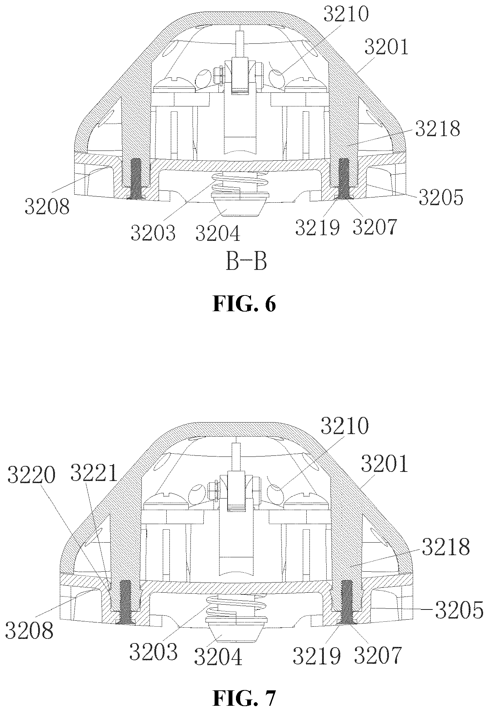

As shown in FIG. 1 to FIG. 19, the embodiment herein provides a front-opening drum washing machine with a hole-free inner drum, which has a simple structure and can greatly reduce the washing water consumption of the washing machine due to no need for filling washing/rinsing water between the inner drum and an outer drum. It avoids the possibility of dirt adhesion between the inner drum and the outer drum, greatly improves user health and user experience, and greatly saves water resource.

The drum washing machine of the embodiment includes a housing 19, and the housing 19 comprises: an upper panel 2, a front panel, a back panel, and a bottom plane. Foot 9 is fixedly installed on the bottom plane so as to support the entire washing machine. The housing 19 is provided with an outer drum 18 inside, and an inner drum 17 is coaxially arranged in the outer drum 18. The main purpose of the outer drum 18 is to collect drainage from the inner drum 17 and discharged water from the inner drum 17 during high-speed centrifugal dehydration. The inner drum 17 rotates, preferably provided with lifting ribs 43, to continuously lift and drop clothes so as to wash the clothes. The inner drum 17 is a hole-free structure. The outer drum 18 has a central mounting hole, and a bearing 12 is fixedly installed. An inner drum shaft 13 that fixedly connected to the inner drum 17 passes through the bearing 12 and is connected to a drive motor 16. An inner drum door 6 is installed on front mouth of the inner drum 17 and is able to be opened/closed, thereby realizing the inner drum 17 as a sealed cabin structure.

A machine door 5 that is able to be opened/closed is installed on the housing 19 of the embodiment.

### Embodiment 1

A laundry lifting device for a washing machine and a drum washing machine of the embodiment are shown in FIG. 1 to FIG. 7.

A laundry lifting device for a washing machine of the embodiment comprises:
a body, which has an accommodating chamber therein;
a water inlet provided in the body and communicating with the accommodating chamber;
and a centrifugal drainage assembly arranged inside the accommodating chamber;
an initial state of the centrifugal drainage assembly is a closed state, and the centrifugal drainage assembly is able to, under action of a centrifugal force, be opened for drainage.

The laundry lifting device of the embodiment can be installed on inner wall of the inner drum of a drum washing machine and lifts laundry to a certain height and then drops the laundry with rotation of the inner drum during washing process. In the disclosure, a centrifugal drainage assembly is integrated in the laundry lifting device. The initial state of the centrifugal drainage assembly is a closed state to keep the inner drum closed and independently containing washing water. The centrifugal drainage assembly can be opened for drainage under the action of centrifugal force, realizing the drainage of a drum washing machine having a hole-free inner drum.

Therefore, in the embodiment, by means of providing a centrifugal drainage assembly in a lifting device, not only laundry lifting and drainage of a drum washing machine with a hole-free inner drum are achieved, modular supply is also formed, thereby facilitating production and assembly and improving the assembly efficiency.

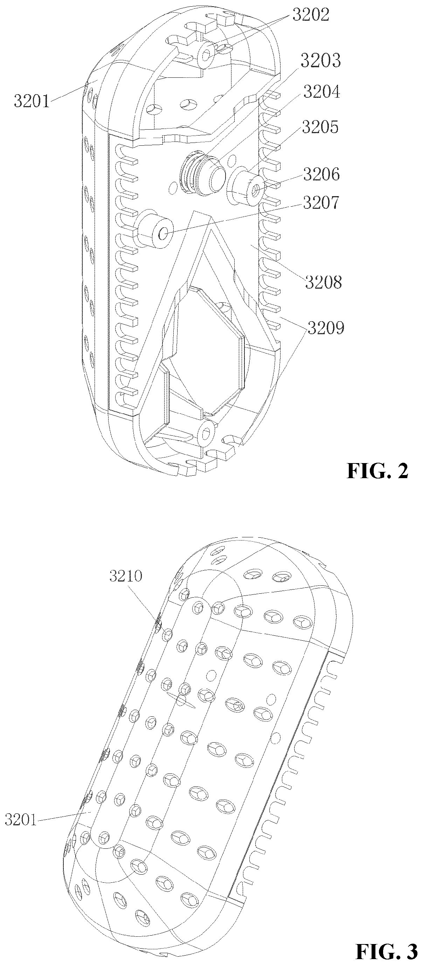

As shown in FIG. 2 to FIG. 7, the body of the embodiment comprises:
a lifting shell 3201, which has a protrusion on a surface of the lifting shell 3201 and has an open cavity therein;
a lifting base 3208 which is detachably installed at an open end of the open cavity of the lifting shell 3201 and forms the accommodating chamber.

The centrifugal drainage assembly is installed on the lifting base 3208, and the water inlet 3209 is arranged at the lifting shell 3201 and/or at the lifting base 3208.

The lifting device of the embodiment includes the lifting shell 3201 with a protrusion on the surface for lifting clothes; the lifting base 3208, detachably installed on the open end of the open cavity of the lifting shell 3201 to form the accommodating chamber, for installment of the centrifugal drainage assembly.

Further, in order to realize the centrifugal drainage and installment of the centrifugal drainage assembly, the centrifugal drainage assembly of the embodiment comprises:
a centrifugal part, used for producing centrifugal movement under action of the centrifugal force;
a sealing plunger 3213, used for block a drainage outlet;
the centrifugal movement of the centrifugal part drives the sealing plunger 3213 to move to open the drainage outlet;
the lifting base 3208 is provided with a plunger through hole for the sealing plunger 3213 to pass through the accommodating chamber.

The centrifugal part of the embodiment comprises a connecting portion 3218 and a counterweight portion 3217, one end of the connecting portion 3218 is connected with the counterweight portion 3217, another end of the connecting portion 3218 is rotatably connected with the sealing plunger 3213, and a middle part of the connecting portion 3218 is rotatably installed on the lifting base 3208 to form a lever structure.

One end of the connecting portion 3218 of the embodiment is provided with a first connecting hole 3215 that is rotatably connected with an end of the sealing plunger 3212. The middle part of the connecting portion 3218 is provided with a second connecting hole 3216.

Further, a guiding part 3214 is installed on the lifting base 3208 of the embodiment at the plunger through hole, the guiding part 3214 has a guiding channel inside that is opposite to the plunger through hole, and the sealing plunger 3213 is arranged inside the guiding channel to move back and forth along the guiding channel, ensuring the sealing plunger 3213 moving back and forth stably so that the sealing plunger 3213 is able to reset more accurately, ensuring the blocking effect of the drainage outlet of the inner drum.

The sealing plunger 3212 of the embodiment is provided with a sealing plug 3204, an elastic part 3203 for providing elastic force for resetting of the sealing plunger 3213 is sleeved on the sealing plunger 3212, and the elastic part 3203 is a spring.

In order to realize fixed connection of the lifting shell 3201 and the lifting base 3208, the lifting base 3208 has a base fixing column 3205, a connecting rib 3219 is arranged in the open cavity of the lifting shell 3201 and extends towards the open end, and the base fixing column 3205 is fixedly connected with the connecting rib 3219.

Preferably, the centrifugal drainage assembly is arranged at center part of the lifting base 3208, and there is at least two base fixing column 3205 which are symmetrically arranged on both sides of the centrifugal drainage assembly.

Further, the base fixing column 3205 and the connecting rib 3219 are clamped and positioned by a clamping structure, and the base fixing column 3205 and the connecting rib 3219 are fixedly connected by a connecting part 3207 after positioning.

Preferably, a locking protrusion 3221 is provided on the connecting rib 3219, the base fixing column 3205 is provided with a channel for the connecting rib to extend in, and a locking groove 3222 which is coordinately clamped with the locking protrusion 3221 is provided on a peripheral wall of the channel.

The connecting rib 3219 of the embodiment is provided with a connecting hole, the base fixing column 3205 is provided with a positioning hole opposite to the connecting hole, and the connecting part 3207 passes through the positioning hole and is fixedly connected to the connecting hole. Preferably, the connecting part 3207 is a connecting screw.

In order to realize the installment of the lifting device inside the inner drum, both ends of an open of the lifting shell 3201 are respectively provided with a shell fixing column 3202 used for fixedly installing the lifting device, and the lifting base 3208 is set in avoidance at position corresponding to the shell fixing column 3202. The shell fixing column 3202 of the embodiment makes the structure of the lifting device installed in the inner drum unchanged, reduces the learning cost of assembly, and improves the assembly efficiency.

Preferably, the lifting base 3208 is a plate-shaped structure that covers the open cavity of the lifting shell 3201, an interval is respectively provided between both ends of the plate-shaped structure and edge of the open of the lifting shell, and the shell fixing column 3202 is correspondingly arranged in the interval at both ends.

The lifting shell 3201 of the embodiment comprises an annular base 3211 and a protrusion 3212 which is integrally formed with the annular base 3211 and protrudes toward one side.

The water inlet 3209 is provided on the annular base 3211, and the protrusion 3212 is provided with a plurality of spray holes 3210 communicating with the open cavity.

As shown in FIG. 1, the embodiment also provides a drum washing machine including the laundry lifting device for a washing machine that comprises:
the inner drum 17;

The inner drum door 6, installed on the mouth of the inner drum 17 and able to be opened/closed;
an independent washing chamber is formed by the inner drum door 6 when closed together with the inner drum 17 so as to independently contain washing water when washing clothes;
a drainage outlet is provided on side wall of the inner drum 17, the lifting device 32 is installed at the drainage outlet on inner wall of the inner drum 17, and the centrifugal drainage assembly blocks and closes the drainage outlet.

In the drum washing machine of the embodiment, an inner drum door 6 is installed on the mouth of the inner drum 17, and the inner drum 17 adopts a drum design without holes, together forming an independent washing chamber for independently containing washing water when washing clothes. There is no need to fill washing/rinsing water between the inner drum and the outer drum so as to greatly reduce the washing water consumption of the washing machine. It avoids the possibility of dirt adhesion between the inner drum and the outer drum, greatly improves user health and user experience, and greatly saves water resource.

Further, the side wall of the inner drum 17 is provided with a fixing hole used for fixedly installing the lifting device 32, and the lifting device 32 is hermetically fixed on the fixing hole through a connecting part, so that the inner drum 17 keeps closed by sealed connection to realize the purpose of the disclosure of independently containing washing water.

In a control method of the drum washing machine of the embodiment, the washing machine includes an inner drum, and the inner drum contains washing water when washing clothes. A drainage hole is provided on side wall of the inner drum, and a lifting device is provided on the drainage hole to control its open/close. The control method includes: during washing process of the washing machine, by controlling rotation speed of the inner drum to reach or exceed a set rotation speed N0, the centrifugal drainage assembly on the lifting device is subjected to centrifugal force to open the drainage hole to drain the inner drum.

Drainage device of the embodiment adopts a centrifugal drainage assembly. The control method is to control the rotation of the inner drum to generate centrifugal force to open the centrifugal drainage assembly so as to achieve drainage. The drainage and dehydration of the drum washing machine with a hole-free inner drum is realized through the centrifugal drainage assembly together with program control.

As an implementation of the embodiment, when the washing machine completes washing program or rinsing program, it controls the rotation speed of the inner drum to reach a first rotation speed N1 and keeps for a set time t1, where N1≥N0, and N0 is bigger than a rotation speed of the inner drum during washing program or rinsing program. When rotation time of the inner drum keeps rotating at the rotation speed N1 reaches t1, the inner drum is controlled to stop rotating and enter a next program.

Preferably, N1 is 110-400 rpm, more preferably is 170±50 rpm, and further preferably is 150±20 rpm.

Preferably, a range of tl is 0.1-5 minutes, more preferably is 1-2 minutes.

Further, the washing machine includes a weighing device for weighing the weight inside the inner drum. The weighing device detects the weight W0 in the inner drum before the inner drum starts rotate at rotation speed of N1, the weighing device detects the weight W1 in the inner drum when the rotation time reaches t1, and a control system judges whether the drainage is normal according to the comparison between W1 and W0.

Further, the control system judges whether the drainage is abnormal according to the value k of W1/W0. If k≥0.7, the control system determines that the drainage is abnormal and gives an alarm. Otherwise, the drainage is normal.

As another implementation of the embodiment, when the washing machine completes washing program or rinsing program, it controls the rotation speed of the inner drum to reach a first rotation speed N1, where N1≥N0, and N0 is bigger than a rotation speed of the inner drum during washing program or rinsing program. When water in the inner drum is all drained, the inner drum is controlled to stop rotating and enter a next program.

Further, the washing machine includes a weighing device for weighing the weight inside the inner drum. During the process when the washing machine controls the inner drum to keep rotating at the rotation speed N1, the control system judges whether the drainage is completed according to the weight in the inner drum detected by the weighing device in real time.

Further, that the control system judges whether the drainage is completed according to the weight in the inner drum detected by the weighing device in real time includes:
The weighing device detects the weight W0, W1, W2, ..., Wt in the inner drum in real time;
makes the difference between the weighing values of adjacent times, recording as n1=W1-W0, n2=W2-Wl, ..., nt=(Wt)-(Wt-1);
when nt remains unchanged for a certain period of time and tends to 0, the drainage is completed.

Further, the control system judges whether the drainage is normal by comparing changes of nl, n2, ..., nt. If n1=n2=...... =nt=0, the control system determines that the drainage is abnormal and gives an alarm.

Further, the washing machine executes a dehydration process, and the minimum rotation speed N2 in the dehydration process is greater than or equal to N0.

### Embodiment 2

The embodiment mainly solves the problem of how to accurately determine the amount of water inflow in a drum washing machine with a hole-free inner drum. A specific scheme is as follows.

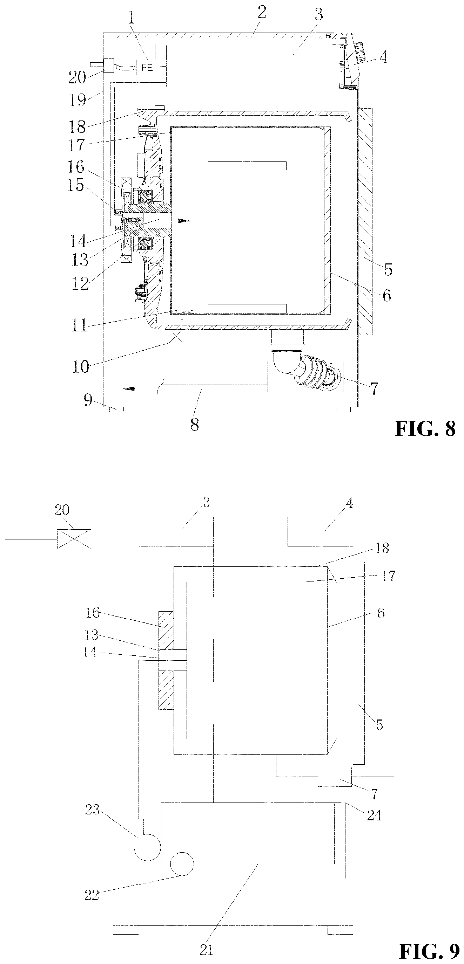

Shown in FIG. 8 is a drum washing machine comprising an inner drum 17 and a water inlet pipe connected with the inner drum 17. The inner drum 17 is a hole-free inner drum that contains washing water when washing clothes. The water inlet pipe is provided with a flow sensor 1 used for detecting the flow of water inflow.

In the embodiment, a flow sensor 1 is provided on the water inlet pipe to monitor the flow when the water enters. When a set water inflow amount is reached, a water inlet valve 20 is closed and water inflow is completed. In this embodiment, the flow sensor is adopted to solve the problem that water inflow of the drum washing machine with a hole-free inner drum according to a set water level, ensuring washing effect, and having a simple structure and convenient operation.

Further, the drum washing machine of the embodiment comprises a water inlet valve 20 and a detergent box 3. The water inlet pipe includes a first water inlet pipe and a second water inlet pipe. An outlet of the water inlet valve 20 is connected to the detergent box 3 through the first water inlet pipe, and outlet of the detergent box 3 is connected to the inner drum 17 through the second water inlet pipe. The flow sensor 1 is arranged on the first water inlet pipe or the second water inlet pipe.

Preferably, the flow sensor 1 is arranged on the first water inlet pipe so as to avoid detergent in the detergent box entering the flow sensor 1.

The drum washing machine of the embodiment includes a main controller 4, and the flow senor 1 and the main controller 4 are electrically connected through a line. The main controller 4 is able to collect the amount of water inflow to the inner drum 17 in real time, and when the set water inflow amount is reached, the water inlet valve 20 is closed.

As an implementation of the embodiment, the flow sensor 1 is a rotor flow sensor, or a turbine flow sensor, or an ultrasonic flow sensor, or an electromagnetic flow sensor, or an orifice plate flow sensor.

In the embodiment, the flow sensor 1 may be arranged at any position of the water inlet pipe, and it is preferable to be arranged at the rear of the water valve 20 so as to accurately measure water flow into the sealed inner drum 17. The flow sensor 1 is connected to the main controller 4 through a line. The main controller 4 is able to collect the amount of water inflow to the inner drum 17 in real time, and when the set water inflow amount is reached, the water inlet valve 20 is closed.

In order to realize water input to the hole-free inner drum of the embodiment, the drum washing machine of the embodiment includes a drive motor 16 and an inner drum shaft 13. The drive motor is connected with the inner drum 17 in a transmission way through the inner drum shaft 13 so as to drive the inner drum 17 to rotate. The inner drum shaft has a hollow channel 14 communicating with inside of the inner drum 17, and the water inlet pipe is communicating with the hollow channel of the inner drum shaft 13.

Specifically, the inner drum shaft 13 is connected with the drive motor 16. The drive motor 16 comprises a stator and a rotor, and the rotor is fixedly connected with the inner drum shaft 13. A through hole is provided at a center of the rotor, and the water inlet pipe passes through the through hole of the rotor and is communicating with the hollow channel 14 of the inner drum shaft 13.

Further, a first dynamic sealing structure 15 is provided between the water inlet pipe and the through hole of the rotor, and a second sealing structure is provided between the through hole of the rotor and the hollow channel 14 of the inner drum shaft 13.

In order to realize the drainage of the hole-free inner drum, the drum washing machine of the embodiment includes an outer drum 18, an inner drum drain hole is provided on a side wall of the inner drum 17, a one-way valve plug 11, which is normally closed, is installed on the inner drum drain hole, and an ejector pin mechanism 10 is installed on the outer drum 18 to push the one-way valve plug 11 for drainage.

As an implementation of the embodiment, the outer drum 18 is provided with a locking mechanism for locking the inner drum 17 from rotating. After the locking mechanism locks the inner drum, the ejector pin mechanism 10 pushes the one-way valve plug 11 for drainage.

As another implementation of the embodiment, the side wall of the inner drum is provided with a plurality of dehydration holes, and centrifugal valves are installed at the dehydration holes respectively. By controlling the inner drum to reach a certain rotation speed, the centrifugal valves are opened under action of centrifugal force for washing drainage or dehydration drainage.

The embodiment also provides a control method of the drum washing machine. The washing machine executes a washing/rinsing procedure, and during water inflow process, the flow sensor detects the flow of water inflow in real time. The washing machine calculates the amount of water inflow according to the flow of water inflow and the water inflow time, and water inflow process is stopped when the amount of water inflow reaches the set water inflow amount of the washing machine.

Multiple flow values of water inflow that can be selected by users are set for the drum washing machine. The washing machine executes water inflow according to the flow value of water inflow selected by users.

The drum washing machine has a function of laundry weighing so that it is able to determine the flow value of water inflow according to the weight of the laundry.

### Embodiment 3

As shown in FIG. 9 to FIG. 11, a drum washing machine of the embodiment includes an inner drum 17 and a water inlet pipe. The inner drum 17 is a hole-free inner drum that contains washing water when washing clothes. The drum washing machine also includes a water measuring device for measuring the amount of water inflow, the water inlet pipe is communicating with the water measuring device, and the water measuring device is communicating with the inner drum.

The drum washing machine of the embodiment is provided with the water measuring device. Water enters the water measuring device for quantitative measurement before water enters the inner drum 1, and number of times that the water measuring device measures water is determined according to a set water level, thereby solving the problem that water inflow of the drum washing machine with a hole-free inner drum according to a set water level and guaranteeing washing effect with a simple structure and convenient operation.

Further, the water measuring device of the embodiment includes a water measuring tank 21, the water measuring tank 21 has a water inlet and a water outlet. The water inlet is communicating with the water inlet pipe, and the water outlet is communicating with the inner drum 17. The water outlet is provided with a water outlet control device used for controlling opening of the water outlet when the amount of water in the water measuring tank 21 reaches a set value.

As an implementation of the embodiment, as shown in FIG. 9, the water measuring tank 21 is arranged under the inner drum 17. The water measuring device includes a water level detecting device 22 used for detecting the water measuring tank 21. The water outlet control device is a water tank drainage pump 23, and the water tank drainage pump 23 starts to pump water inside the water measuring tank 21 to the inner drum 17 when the water level detecting device detects the water level in the water measuring tank 21 reaches a set value.

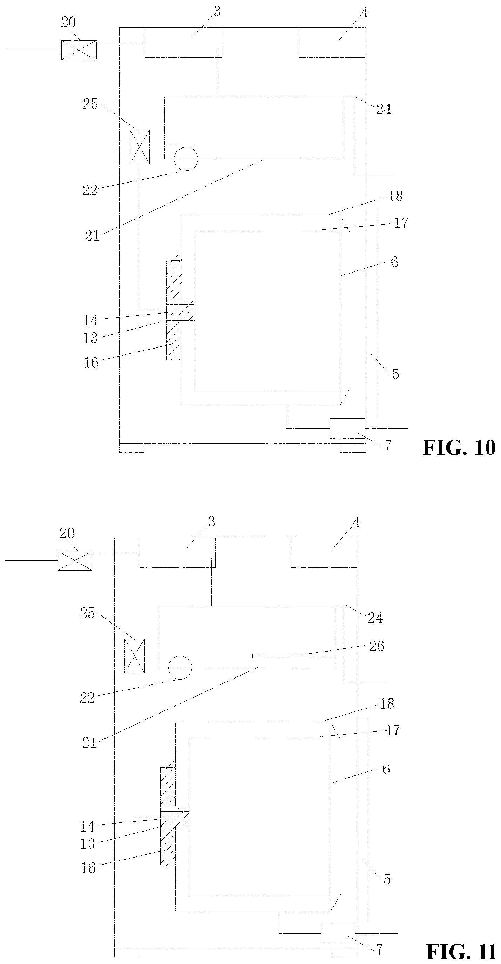

As an implementation of the embodiment, as shown in FIG. 10, the water measuring tank 21 is arranged above the inner drum 17. The water measuring device includes a water level detecting device 22 used for detecting the water measuring tank 21. The water outlet control device is a water tank drain valve 25, and the water tank drain valve 25 opens to discharge water inside the water measuring tank 21 to the inner drum 17 when the water level detecting device detects the water level in the water measuring tank 21 reaches a set value.

The water level detecting device 22 of the embodiment is a liquid level sensor, the liquid level sensor includes an air chamber and a sensor unit, and the air chamber is communicating with the water measuring tank. Alternatively, the water level detecting device 22 includes several water level probes provided inside the water measuring tank and arranged along depth direction of the water measuring tank.

As an implementation of the embodiment, the water measuring tank 21 is arranged above the inner drum 17, the water outlet is arranged at a bottom wall of the water measuring tank 21. The water outlet control device is a water tank one-way valve that keeps the water outlet normally closed. When the amount of water in the water measuring tank a certain value, the water tank one-way valve opens under water pressure, and the water in the water measuring tank 21 is discharged to the inner drum 17, following that the water tank one-way valve resets to keep the water outlet close.

The water measuring tank 21 of the embodiment is provided with an overflow hole 24, and the overflow hole 24 is connected to an overflow pipe used for leading out overflowing water of the water measuring tank.

Preferably, the drum washing machine includes a drainage pipe 8, and the overflow pipe is communicating with the drainage pipe 8.

As an implementation of the embodiment, as shown in FIG. 11, the water measuring device includes a heating device 26 arranged in the water measuring tank 21 and a temperature detecting device for detecting temperature of water in the water measuring tank.

The embodiment also provides a control method of the drum washing machine. The washing machine executes a washing/rinsing procedure, and controls washing water to flow into the water measuring tank. When the amount of water in the water measuring tank reaches a set value, water inflow is stopped. The water in the water measuring tank is all discharged to the inner drum, and then water flowing into the water measuring tank starts again. The above process is repeated until water level in the inner drum reaches a set value, and the water inflow process is ended.

Further, the washing machine controls washing water to flow into the water measuring tank. When the amount of water in the water measuring tank reaches a set value, water inflow is stopped, and the heating device is controlled to heat washing water. When the temperature detecting device detects that the temperature of water in the water measuring tank reaches a set value, the water in the water measuring tank is all discharged to the inner drum.

### Embodiment 4

The embodiment mainly solves the problem unbalanced air pressure of the sealed cabin of the drum washing machine with a hole-free inner drum. Specifically, the problem is that sudden water cut off of a solenoid valve, especially the water cut off of tap water pipe network, forms a negative pressure, making the washing water in the sealed cabin return to the pipe network, or there is gas inside, making water inflow difficult.

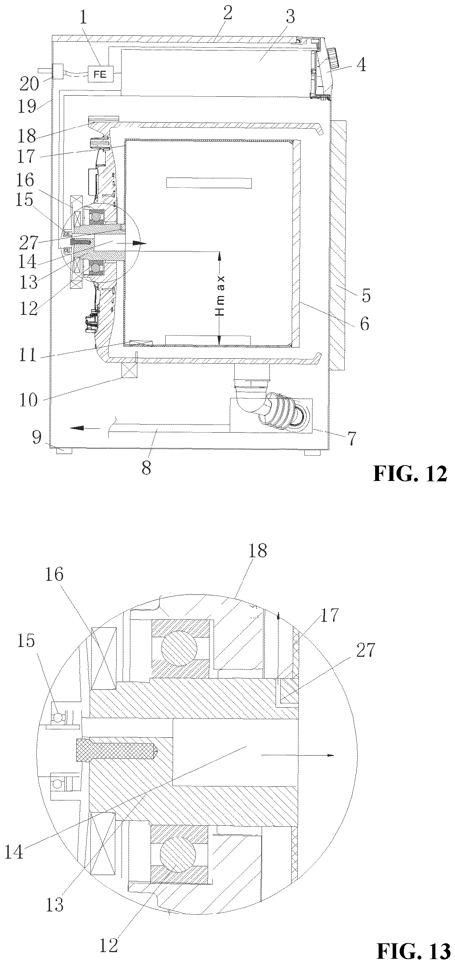

As shown in FIG. 12 to FIG. 14, a drum washing machine of the embodiment comprises an inner drum 17. The inner drum 17 is a hole-free inner drum that contains washing water when washing clothes. The drum washing machine also includes an air pressure balancing mechanism for communicating the inner drum 17 and external environment to balance the air pressure inside the inner drum.

During water inflow, the air in the sealed cabin of the inner drum can overflow through the air pressure balancing mechanism under pressure so as to ensure air pressure balance.

When water is suddenly cut off, external air can enter the sealed cabin of the inner drum rapidly and break suck-back, so that the air pressure balance is guaranteed, avoiding washing water from being sucked into the tap water pipe network.

In other cases, such as dehydration, the air pressure balancing mechanism is also able to ensure the air pressure balance of the inner drum.

As an implementation of the embodiment, the air pressure balancing mechanism includes a pressure equalizing channel 27 arranged on the inner drum 17, an end of the pressure equalizing channel 27 that communicating with the inside of the inner drum 17 is arranged at a position on the inner drum 17 which is close to a rotation axis and always higher than a highest water level in the inner drum 17.

The drum washing machine of the embodiment comprises a drive motor 16 and an inner drum shaft 13. The drive motor 16 is connected with the inner drum 17 in a transmission way through the inner drum shaft 13 so as to drive the inner drum 17 to rotate. The pressure equalizing channel 27 is provided on the inner drum shaft 13 and communicates the inside of the inner drum 17 and external environment. A highest water level in the inner drum 17 is lower than the inner drum shaft 13 so as to avoid the water in the inner drum flowing out from the pressure equalizing channel.

The drum washing machine of the embodiment includes an outer drum 18, the inner drum 17 is arranged inside the outer drum 18, and water drained from the inner drum 17 is drained out through the outer drum 18. An inner drum door 6 is installed at a mouth of the inner drum 17 for closing the inner drum, and a mouth of the outer drum is open. An end of the pressure equalizing channel 27 is communicating with the inside of the inner drum 17, and another end is arranged inside the outer drum 18 and communicating with it. In this way, preventing extreme situation, water flows out from the pressure equalizing channel is able to be collected in the outer drum 18.

Further, in the embodiment, a side wall of the inner drum 17 is provided with an inner drum drain hole, a one-way valve plug 11, which is normally closed, is installed on the inner drum drain hole, and an ejector pin mechanism 10 is installed on the outer drum 18 to push the one-way valve plug 11 for drainage.

Preferably, the outer drum 18 is provided with a locking mechanism for locking the inner drum from rotating. After the locking mechanism locks the inner drum, the ejector pin mechanism pushes the one-way valve plug for drainage.

Further, the drum washing machine includes a water inlet pipe, the inner drum shaft 13 has a hollow channel 14 communicating with the inside of the inner drum 17, and the water inlet pipe is communicating with the hollow channel 14 of the inner drum shaft 13. The pressure equalizing channel 27 and the hollow channel 14 are respectively communicating with the inside of the inner drum 17 and are separated from each other. In this way, it can be ensured that air in the sealed cabin of the inner drum is able to discharged smoothly to keep air pressure balance inside the inner drum, and meanwhile, leakage of water due to influent water being directly discharged through the pressure equalizing channel 27 is prevented.

Specifically, the hollow channel 27 extends from one end to the other end along a central axis of the inner drum shaft. The pressure equalizing channel includes a first channel section and a second channel section. The first channel section is parallel to the hollow channel, and one end of it is communicating with the inside of the inner drum. One end of the second channel section is communicating with the first channel section, and the other end extends to an outer peripheral wall of the inner drum shaft and is communicating with inside of the outer drum.

Preferably, the second channel section is perpendicular to the first channel section so as to form a L-shaped pressure equalizing channel.

Further, the inner drum shaft 13 is connected with the drive motor 16. The drive motor 16 comprises a stator and a rotor, and the rotor is fixedly connected with the inner drum shaft. A through hole is provided at a center of the rotor, and the water inlet pipe passes through the through hole of the rotor and is communicating with the hollow channel of the inner drum shaft.

Preferably, a first dynamic sealing structure is provided between the water inlet pipe and the through hole of the rotor, and a second sealing structure is provided between the through hole of the rotor and the hollow channel of the inner drum shaft.

In the drum washing machine of the embodiment, the side wall of the inner drum 17 is provided with a plurality of dehydration holes, and centrifugal valves are installed at the dehydration holes. The centrifugal valves are opened under action of centrifugal force for dehydration drainage.

### Embodiment 5

The embodiment mainly solves the problem of unbalanced air pressure of the sealed cabin of the drum washing machine with a hole-free inner drum. Specifically, the problem is that sudden water cut off of a solenoid valve, especially the water cut off of tap water pipe network, forms a negative pressure, making the washing water in the sealed cabin return to the pipe network, or there is gas inside, making water inflow difficult.

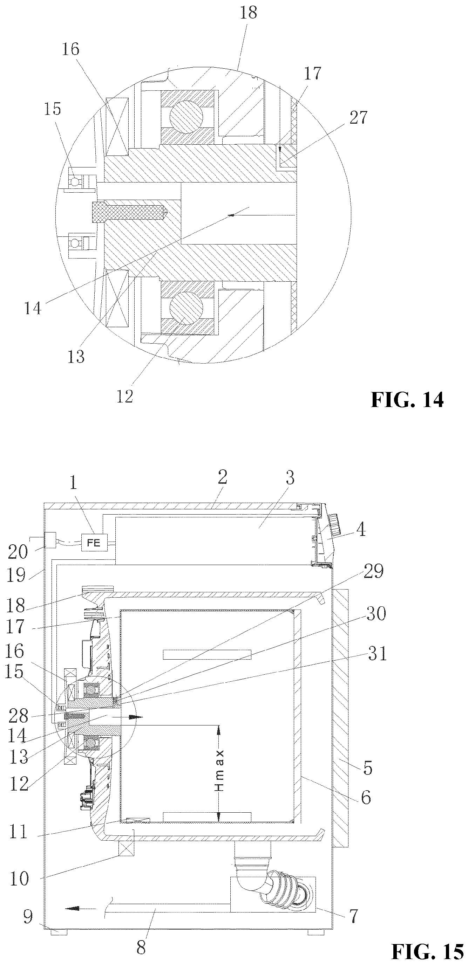

As shown in FIG. 15 to FIG. 19, a drum washing machine of the embodiment includes an inner drum 17. The inner drum 17 is a hole-free inner drum that contains washing water when washing clothes. The drum washing machine also includes a pressure boosting mechanism and/or a pressure relief mechanism for communicating the inner drum and external environment to balance the air pressure inside the inner drum 17.

The pressure boosting mechanism of the embodiment includes a pressure boosting channel 28 and a negative pressure safety valve 29, and the negative pressure safety valve 29 is arranged on the pressure boosting channel 28 and is used for one-way communicating the pressure boosting channel 28 when pressure inside the inner drum 17 is less than air pressure of the external environment. Air of the external environment enters the inner drum 17 through the pressure boosting channel for pressure boosting until air pressure inside the inner drum 17 is balanced with the air pressure of the external environment, the negative pressure safety valve 29 is closed.

The pressure relief mechanism of the embodiment includes an pressure relief channel 30 and a positive pressure safety valve 31, the pressure relief channel 30 is arranged at a position on the inner drum 17 which is close to an rotation axis and always higher than a highest water level in the inner drum 17, and the positive pressure safety valve 31 is arranged on the pressure relief channel 30 and is used for one-way communicating the pressure relief channel 30 for pressure relief when pressure inside the inner drum 17 is greater than air pressure of the external environment. Until air pressure inside the inner drum 17 is balanced with the air pressure of the external environment, the positive pressure safety valve 31 is closed.

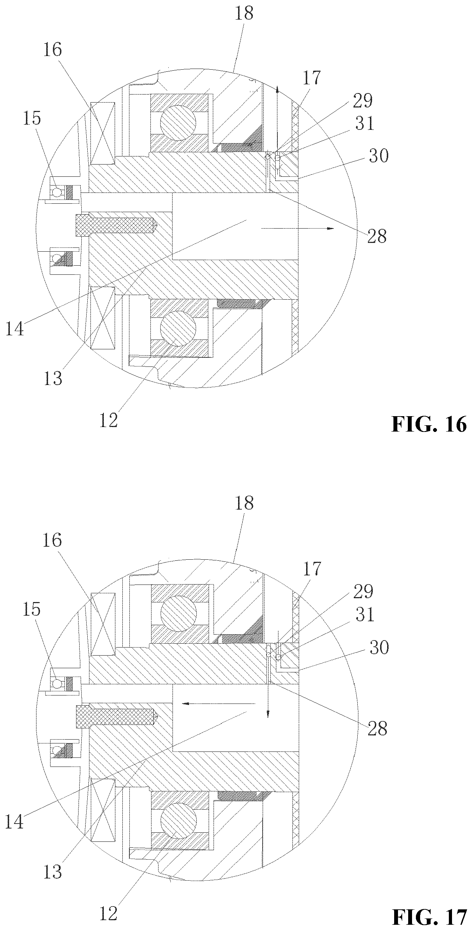

As shown in FIG. 16, during water inflow, air inside the sealed cabin of the inner drum 17 is pressurized. Once air pressure is greater than a set value of the positive pressure safety valve, the positive pressure safety valve is opened and air overflows through the pressure relief channel to ensure air pressure balance.

As shown in FIG. 16, when water is suddenly cut off, air inside the sealed cabin of the inner drum 17 is pressurized. Once air pressure is less than a set value of the positive pressure safety valve, external air can enter the sealed cabin of the inner drum rapidly and break suck-back, so that the air pressure balance is guaranteed, avoiding washing water from being sucked into tap water pipe network.

In other cases, such as dehydration, the air pressure balancing mechanism is also able to ensure the air pressure balance of the inner drum.

The drum washing machine of the embodiment comprises a drive motor 16 and an inner drum shaft 13. The drive motor 16 is connected with the inner drum 17 in a transmission way through the inner drum shaft 13 so as to drive the inner drum 17 to rotate. The pressure boosting channel 28 and/or the pressure relief channel 30 is provided on the inner drum shaft 13 and communicates the inside of the inner drum 17 and external environment. A highest water level in the inner drum 17 is lower than the inner drum shaft 13.

The drum washing machine of the embodiment includes an outer drum 18, the inner drum 17 is arranged inside the outer drum 18, and water drained from the inner drum 17 is drained out through the outer drum 18. An inner drum door 6 is installed at a mouth of the inner drum 17 for closing the inner drum, and a mouth of the outer drum is open. An end of the pressure boosting channel 28 and/or the pressure relief channel 30 is communicating with the inside of the inner drum 17, and another end is arranged inside the outer drum 18 and communicating with it.

The drum washing machine of the embodiment includes a water inlet pipe, the inner drum shaft 13 has a hollow channel 14 communicating with the inside of the inner drum 17, and the water inlet pipe is communicating with the hollow channel 14 of the inner drum shaft 13. The pressure relief channel 30 and the hollow channel 14 are respectively communicating with the inside of the inner drum 17 and are separated from each other.

As shown in FIG. 16 and FIG. 17, the hollow channel 14 extends from one end to the other end along a central axis of the inner drum shaft 13. The pressure relief channel 30 includes a first channel section and a second channel section. The first channel section is parallel to the hollow channel, and one end of it is communicating with the inside of the inner drum. One end of the second channel section is communicating with the first channel section, and the other end extends to an outer peripheral wall of the inner drum shaft and is communicating with inside of the outer drum.

Preferably, the second channel section is perpendicular to the first channel section so as to form a L-shaped pressure relief channel.

The drum washing machine of the embodiment includes a water inlet pipe, the inner drum shaft 13 has a hollow channel 14 communicating with the inside of the inner drum 17, and the water inlet pipe is communicating with the hollow channel 14 of the inner drum shaft 13. The pressure boosting channel 28 is communicating with the hollow channel 14.

Further, the hollow channel 14 extends from one end to the other end along a central axis of the inner drum shaft 13. One end of the pressure boosting channel 30 is communicating with the hollow channel 14, and the other end extends to an outer peripheral wall of the inner drum shaft 13 and is communicating with inside of the outer drum.

Preferably, the pressure boosting channel 28 is perpendicular to the hollow channel.

Further, the inner drum shaft 13 is connected with the drive motor 16. The drive motor 16 comprises a stator and a rotor, and the rotor is fixedly connected with the inner drum shaft. A through hole is provided at a center of the rotor, and the water inlet pipe passes through the through hole of the rotor and is communicating with the hollow channel of the inner drum shaft.

Preferably, a first dynamic sealing structure is provided between the water inlet pipe and the through hole of the rotor, and a second sealing structure is provided between the through hole of the rotor and the hollow channel of the inner drum shaft.

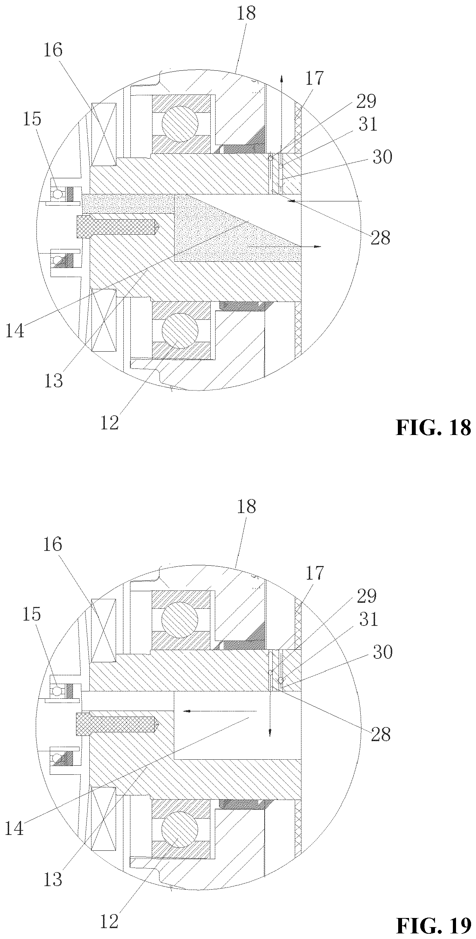

As shown in FIG. 18 and FIG. 19, the pressure boosting channel 28 and the pressure relief channel 30 are both arranged on the inner drum shaft 13, openings communicating with atmosphere are both arranged at an inner side of the outer drum 18, and openings communicating with the sealed cabin of the inner drum 17 are both arranged at an inner side of the water inlet channel 14 of the inner drum shaft 13.

It can be imaged that preferably, the pressure boosting channel 28 and the pressure relief channel 30 are both arranged on the inner drum shaft 13, openings communicating with atmosphere are both arranged at an inner side of the outer drum 18, and openings communicating with the sealed cabin of the inner drum 17 are both arranged at an inner side of the sealed cabin.

The above embodiments can be implemented individually or in combination with each other.

## Claims

1. A laundry lifting device for a washing machine comprising:
a body with an accommodating chamber therein;
a water inlet being provided on the body and being communicated with the accommodating chamber;
and a centrifugal drainage assembly being arranged inside the accommodating chamber; **characterized in that**,
an initial state of the centrifugal drainage assembly is a closed state, and the centrifugal drainage assembly is able to, under action of a centrifugal force, be opened for drainage.

2. The laundry lifting device for a washing machine according to claim 1, **characterized in that** the body comprises:
a lifting shell with a protrusion on a surface of the lifting shell and an open cavity therein;
a lifting base is configured to be detachably installed at an open end of the open cavity of the lifting shell and forms the accommodating chamber;
the centrifugal drainage assembly is installed on the lifting base, and the water inlet is arranged on the lifting shell and/or the lifting base.

3. The laundry lifting device for the washing machine according to claim 2, **characterized in that** the centrifugal drainage assembly comprises:
a centrifugal part for producing a centrifugal movement under action of the centrifugal force;
a sealing plunger for blocking a drainage outlet;
the centrifugal movement of the centrifugal part drives the sealing plunger to move to open the drainage outlet;
the lifting base is provided with a plunger through hole for the sealing plunger to pass through the accommodating chamber.

4. The laundry lifting device for the washing machine according to claim 3, **characterized in that** the centrifugal part comprises a connecting portion and a counterweight portion, one end of the connecting portion is connected with the counterweight portion, another end of the connecting portion is rotatably connected with the sealing plunger, and a middle part of the connecting portion is rotatably installed on the lifting base to form a lever structure;
a guiding part is installed on the lifting base at the plunger through hole, the guiding part has a guiding channel inside that is opposite to the plunger through hole, and the sealing plunger is arranged inside the guiding channel to move back and forth along the guiding channel.

5. The laundry lifting device for the washing machine according to any one of claims 2 to 4, **characterized in that** the lifting base has a base fixing column, a connecting rib is arranged in the open cavity of the lifting shell and extends towards the open end, and the base fixing column is fixedly connected with the connecting rib;
preferably, the centrifugal drainage assembly is arranged at a center part of the lifting base, and there is at least two the base fixing columns which are symmetrically arranged on both sides of the centrifugal drainage assembly.

6. The laundry lifting device for the washing machine according to claim 5, **characterized in that** the base fixing column and the connecting rib are clamped and positioned by a clamping structure, and the base fixing column and the connecting rib are fixedly connected by a connecting part after positioning;
preferably, a locking protrusion is provided on the connecting rib, the base fixing column is provided with a channel for the connecting rib to extend in, and a locking groove which is coordinately clamped with the locking protrusion is provided on a peripheral wall of the channel;
the connecting rib is provided with a connecting hole, the base fixing column is provided with a positioning hole opposite to the connecting hole, and the connecting part passes through the positioning hole and is fixedly connected to the connecting hole.

7. The laundry lifting device for the washing machine according to any one of claims 2 to 4, **characterized in that** both ends of the open end of the lifting shell are respectively provided with a shell fixing column used for fixedly installing the lifting device, and the lifting base is set in avoidance at position corresponding to the shell fixing column;
preferably, the lifting base is a plate-shaped structure that covers the open cavity of the lifting shell, an interval is respectively provided between both ends of the plate-shaped structure and an edge of the open end of the lifting shell, and the shell fixing column is correspondingly arranged in the interval at both ends.

8. The laundry lifting device for the washing machine according to any one of claims 2 to 4, **characterized in that** the lifting shell comprises an annular base and the protrusion which is integrally formed with the annular base and protrudes toward one side;
the water inlet is provided on the annular base, and the protrusion is provided with a plurality of spray holes communicating with the open cavity.

9. A drum washing machine including the laundry lifting device for the washing machine according to any one of claims 1 to 8, comprising:
an inner drum;
an inner drum door being installed on a mouth of the inner drum and being able to be opened or closed; **characterized in that**,
an independent washing chamber is formed by the inner drum door when closed together with the inner drum so as to independently contain washing water when washing clothes;
the drainage outlet is provided on a side wall of the inner drum, the lifting device is installed at the drainage outlet on the side wall of the inner drum, and the centrifugal drainage assembly blocks and closes the drainage outlet.

10. The drum washing machine according to claim 9, **characterized in that** the side wall of the inner drum is provided with a fixing hole used for fixedly installing the lifting device, and the lifting device is hermetically fixed on the fixing hole through a connecting part.
